# EUROPÄISCHE PATENTANMELDUNG

(11) **EP 1 584 574 A2**
(43) Veröffentlichungstag der Anmeldung: **12.10.2005**
(21) Anmeldenummer: 05005227.3
(22) Anmeldetag: 10.03.2005
(51) Int. Cl.: B65D 75/00, B32B 3/14, B32B 27/00, B32B 31/00

(54) **Folie mit Verstärkungsstreifen sowie Vorrichtung und Verfahren zur Herstellung der Folie**

(30) Priorität: 07.04.2004 DE 102004016841
(71) Anmelder: ILLINOIS TOOL WORKS INC., Illinois 60025-5811 (US)
(72) Erfinder: Koch, Ulrich, 51588 Nümbrecht (DE)
(74) Vertreter: von Kreisler Selting Werner

(57) **Zusammenfassung**

Eine Folie, insbesondere eine Streckfolie, die zum Umwickeln von auf einer Palette angeordneten Verpackungseinheiten geeignet ist, besteht aus einer Folienbahn (10). Um die Reißfestigkeit der Folienbahn (10) zu erhöhen ist mindestens ein Verstärkungsstreifen (12) mit der Folienbahn (10) verbunden. Zur weiteren Erhöhung der Reißfestigkeit verläuft der Verstärkungsstreifen (12) nicht in Längsrichtung (14) der Folienbahn (10), sondern ist gegenüber der Längsrichtung (14) seitlich ausgelenkt.

## Beschreibung

Folien, insbesondere Streck- bzw. Stretchfolien, die vorgestreckt bzw. vorgereckt sind, werden beispielsweise zum Umwickeln von auf Paletten stehenden Verpackungseinheiten, wie Kisten oder Kartons verwendet.

Zur Verstärkung von Folienbahnen ist es bekannt, diese mit Verstärkungsstreifen zu versehen, um beispielsweise ein Einreißen der Folie zu verhindern. Das Vorsehen mehrerer in Längsrichtung der Folienbahn verlaufender Verstärkungsstreifen, die ebenfalls aus Folienmaterial bestehen, ist aus DE 100 07 614 bekannt. Trotz Vorsehens derartiger Verstärkungsstreifen kann es bei großen Belastungen zu Beschädigungen der Folie kommen.

Aufgabe der Erfindung ist es, eine Folie, insbesondere eine Streckfolie zu schaffen, deren Reißfestigkeit verbessert ist. Des weiteren ist es Aufgabe der Erfindung, eine Vorrichtung sowie ein Verfahren zur Herstellung der Folie zu schaffen.

Die erfindungsgemäße Folie, bei der es sich insbesondere um eine Streckfolie handelt, weist mindestens einen mit einer vorzugsweise gestreckten Folienbahn verbundenen Verstärkungsstreifen auf. Zur Verbesserung der Reißfestigkeit verläuft der Verstärkungsstreifen nicht ausschließlich in Längsrichtung, sondern ist gegenüber der Längsrichtung der Folienbahn zumindest teilweise seitlich ausgelenkt. Der Verstärkungsstreifen verläuft somit zumindest teilweise schräg zur Längsrichtung der Folienbahn. Der Verstärkungsstreifen verläuft vorzugsweise wellen- oder zick-zack-förmig. Ebenso kann der Verstärkungsstreifen einen Sinus-förmigen Verlauf aufweisen. Durch einen derartigen Verlauf des mindestens einen Verstärkungsstreifens können von dem Verstärkungsstreifen Kräfte aufgenommen werden, die in unterschiedliche Richtungen in der Folienbahn wirken. Dies hat zur Folge, dass die Gefahr des Einreißens der Folie verringert ist.

Vorzugsweise sind die Verstärkungsstreifen in einer Ebene angeordnet und liegen insbesondere vollständig an der Oberfläche der Folie an. Besonders bevorzug ist es hierbei, dass die Verstärkungsstreifen in regelmäßigen Abständen und insbesondere über Ihre gesamte Länge mit der Folie verbunden sind.

Die Verbindung der Verstärkungsstreifen mit der Folie kann durch Kleben oder durch den Einfluss von Wärme erfolgen. Vorzugsweise wird jedoch die Eigen-Haftfähigkeit der Folie ausgenutzt, so dass die Verstärkungsstreifen auf Grund der Eigenhaftung an der Folienbahn haften. Hierbei ist es bevorzugt, dass das Material der Verstärkungsstreifen denen der Folienbahn entspricht oder zumindest ähnlich ist. Ggf. kann, um ein sicheres Verbinden des Verstärkungsstreifens mit der Folienbahn zu gewährleisten, eine zusätzliche Wärmebehandlung erfolgen.

Vorzugsweise sind mehrere Verstärkungsstreifen vorgesehen, die zueinander beabstandet angeordnet sein können, wobei der Abstand konstant sein kann oder zur weiteren Verbesserung der Aufnahme unterschiedlicher Kräfte variieren kann. Ebenso ist es möglich, sich kreuzende Verstärkungsstreifen vorzusehen. Beim Vorsehen mehrerer Verstärkungsstreifen ist es besonders bevorzugt, dass die einzelnen Verstärkungsstreifen einen unterschiedlichen Verlauf aufweisen, beispielsweise die Steigungen der Kurven unterschiedlich sind.

Vorzugsweise beträgt die Breite der einzelnen Verstärkungsstreifen maximal 10 %, insbesondere maximal 7 % der Breite der Folienbahn.

Das Vorsehen von seitlich ausgelenkten Verstärkungsstreifen ist sowohl bei gelochten als auch bei ungelochten Folien zweckmäßig.

Eine erfindungsgemäße Vorrichtung zur Herstellung der erfindungsgemäßen Folie weist eine Abwickeleinrichtung für eine Folienbahn auf. Bei der Folienbahn handelt es sich um eine bereits gereckte oder noch zu reckende Folienbahn. Ferner weist die Vorrichtung eine Aufwickeleinrichtung auf, auf die die Folienbahn, nach dem sie mit mindestens einem Verstärkungsstreifen versehen wurde, wieder aufgewickelt wird. Zum Zuführen des mindestens einen Verstärkungsstreifens ist eine Bereitstellungseinrichtung vorgesehen. Bei der Bereitstellungseinrichtung kann es sich um eine Einrichtung handeln, die beispielsweise ein Rolle trägt, auf der der Verstärkungsstreifen aufgewickelt ist. Ebenso kann die Bereiststellungseinrichtung mehrere derartige Rollen tragen, deren Abstand zueinander konstant oder auch variabel sein kann. Sofern mehrere Verstärkungsstreifen vorgesehen werden sollen, ist es auch möglich, dass ein Verstärkungsstreifen in Längsrichtung beispielsweise durch Schneiden getrennt und über Umlenkrollen oder dgl. der Folienbahn zugeführt wird. Zur Erzeugung eines bezüglich der Längsrichtung der Folienbahn seitlich ausgelenkten Verstärkungsstreifens ist eine Verfahreinrichtung zum Verändern der Lage des Verstärkungsstreifens gegenüber der Folienbahn vorgesehen. Hierbei ist es möglich, mit Hilfe der Verfahreinrichtung die Folienbahn und oder den Verstärkungsstreifen zu verfahren. Ebenso oder zusätzlich können auch die ggf. vorgesehenen Umlenkrollen verfahren werden.

Vorzugsweise erfolgt ein Auslenken des Verstärkungsstreifens. Hierzu kann als Verfahreinrichtung beispielsweise ein einfacher Stift oder eine einfache Rolle vorgesehen sein, die einen von einer ortsfesten Rolle abzuwickelnden Verstärkungsstreifen seitlich auslenkt. Vorzugsweise erfolgt jedoch ein Verfahren der Bereitstellungseinrichtung, so dass die Verfahreinrichtung mit der Bereitstellungseinrichtung verbunden ist.

Besonders bevorzugt ist es, dass die Verfahreinrichtung einen pneumatischen Hubzylinder aufweist, der vorzugsweise über ein elektropneumatisches Ventil angesteuert wird. Hierdurch ist es auf einfache Weise möglich, die Bereitstellungseinrichtung oder eine entsprechende Umlenkeinrichtung quer zur Längsrichtung der Folienbahn zu verfahren. Das Vorsehen eines pneumatischen Hubzylinders hat den Vorteil, dass dieser auf einfache Weise exakt angesteuert werden kann. Somit kann auf einfache Weise die Auslenkung des Verstärkungsstreifens variiert werden.

Vorzugsweise weist die erfindungsgemäße Vorrichtung zusätzlich eine Verbindungseinrichtung auf, durch die ein Verbinden des mindestens einen Verstärkungsstreifens mit der Folienbahn erfolgt. Bei der Verbindungseinrichtung kann es sich um eine Anblaseinrichtung handeln, durch die Verstärkungsstreifen an die Folienbahn, oder umgekehrt, angeblasen werden. Wie vorstehend beschrieben, erfolgt ein Verbinden des Verstärkungsstreifens mit der Folienbahn vorzugsweise auf Grund der Eigenhaftung. An statt oder zusätzlich zu einer Anblaseinrichtung als Verbindungseinrichtung kann eine Andrückeinrichtung, insbesondere eine Andrückrolle vorgesehen sein.

Gemäß des erfindungsgemäßen Verfahrens zum Herstellen der Folien mit ausgelenktem Verstärkungsstreifen wird eine Folienbahn in Längsrichtung bewegt. Dies erfolgt beispielsweise indem eine Folienbahn von einer ersten Rollen abgewickelt und auf eine zweite Rolle aufgewickelt wird. Hierbei kann die Folie zusätzlich gestreckt werden. Es ist jedoch auch möglich, eine bereits gestreckte Folie zu verwenden. Während des Bewegens der Folienbahn wird somit erfindungsgemäß ein Verstärkungsstreifen zugeführt, wobei das Zufügen des Verstärkungsstreifens derart erfolgt, dass der mindestens eine Verstärkungsstreifen gegenüber der Längsrichtung der Folienbahn ausgelenkt wird. Vorzugsweise wird der Verstärkungsstreifen hierzu quer zur Folienbahn bewegt. Ein ggf. erforderliches Verbinden des Verstärkungsstreifens mit der Folienbahn erfolgt durch Andrücken oder Anblasen des Verstärkungsstreifens an die Folienbahn, oder umgekehrt.

Nachfolgend wird die Erfindung an Hand einer bevorzugten Ausführungsform unter Bezugnahme auf die anliegenden Zeichnungen näher erläutert.

Es zeigen:
- Figur 1: eine schematische Draufsicht auf eine Folienbahn,
- Figur 2: eine Draufsicht einer schematisch dargestellten Vorrichtung zur Herstellung der erfindungsgemäßen Folienbahn und
- Figur 3: eine schematische Seitenansicht eines Teils der Vorrichtung in Richtung des Pfeils II in Figur 1.

Eine erfindungsgemäße Folienbahn 10 weist einen im dargestellten Ausführungsbeispiel wellen- bzw. Sinus-förmigen Verstärkungsstreifen 12 auf. Der Verstärkungsstreifen 12 ist somit gegenüber einer Längsrichtung 14 der Folienbahn 10 seitlich ausgelenkt.

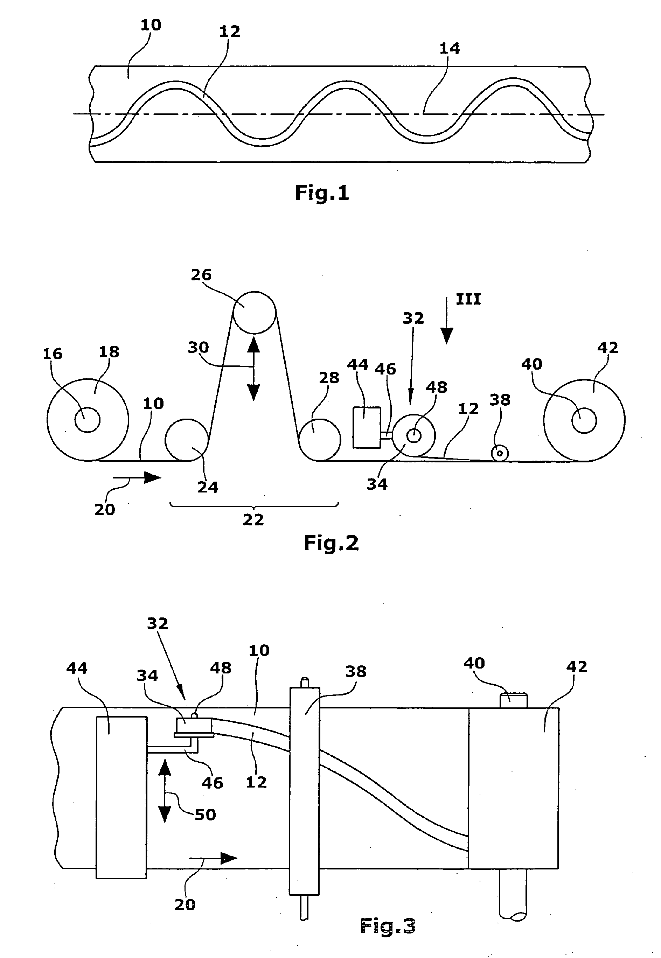

Zur Herstellung einer derartigen Folienbahn 10 kann die in den Figuren 2 und 3 schematisch dargestellte Vorrichtung verwendet werden. Eine derartige Vorrichtung weist eine Abwickeleinrichtung 16 auf, die eine Folienrolle 18 trägt. Eine von der Folienrolle 18 abgewickelte Folienbahn 10 bewegt sich in Richtung eines Pfeils 20.

Im dargestellten Ausführungsbeispiel weist die Folienrolle 18 eine nicht vorgestreckte Folienbahn 10 auf. Zum Strecken der Folienbahn 10 ist eine Streckeinrichtung 22 vorgesehen. Diese weist drei Umlenkrollen 24, 26, 28 auf, wobei die Umlenkrolle 28 zum Strecken der Folie in Richtung eines Pfeils 30 verschiebbar ist. Ferner kann die Transportgeschwindigkeit der Folienbahn 10, sowie ggf. die Abwickel- und/ oder Aufwickelgeschwindigkeit gesteuert bzw. eingestellt werden.

Eine Bereitstellungseinrichtung 32 der Vorrichtung trägt eine Verstärkungsstreifen-Rolle 34, von der ein Verstärkungsstreifen 12 abgewickelt werden kann. Der Verstärkungsstreifen 12 wird sodann der Folienbahn 10 zugeführt, wobei dies im dargestellten Ausführungsbeispiel über eine als Verbindungseinrichtung 38 dienende Andrückrolle erfolgt, so dass der Verstärkungsstreifen 12 auf Grund der Eigenhaftung an der Folienbahn 10 haftet.

Die Folienbahn 10 wird sodann zusammen mit dem mit der Folienbahn 10 verbundenen Verstärkungsstreifen 12 mit Hilfe einer Aufwickeleinrichtung 40 aufgewickelt. Hierbei kann es sich bei der Aufwickeleinrichtung 40 um einen ggf. angetriebenen Dorn handeln, der sodann die Folienrolle 42 trägt.

Um ein gegenüber der Längsrichtung 14 der Folienbahn 10 seitliches Auslenken des Verstärkungsstreifens 12 zu ermöglichen, ist eine Verfahreinrichtung 44 vorgesehen, die über einen Arm 46 die Verstärkungsstreifen-Rolle 34 auf einem Dorn 48 trägt. Die Verfahreinrichtung 44 weist vorzugsweise einen mit einem pneumatischen Ventil verbundenen pneumatischen Hubzylinder auf, um den Arm 46 und damit die Verstärkungsstreifen-Rolle 34 in Richtung eines Pfeils 50 (Figur 3) zu verfahren.

Um mehrere Verstärkungsstreifen 12 vorzusehen, kann die Verfahreinrichtung 44 beispielweise mehrere Arme 46 aufweisen, die jeweils eine Verstärkungsstreifen-Rolle 34 tragen. Ebenso kann ein Arm vorgesehen sein, der mehrere Rollen trägt. Des weiteren ist es möglich, in Transportrichtung 20 der Folienbahn 10 mehrere Bereitstellungseinrichtungen 48 sowie ggf. mehrere Verfahreinrichtungen vorzusehen.

## Patentansprüche

1. Folie, insbesondere Streckfolie, insbesondere zum Umwickeln von auf einer Palette angeordneten Verpackungseinheiten, mit
einer Folienbahn (10) und
mindestens einem mit der Folienbahn (10) verbundenen Verstärkungsstreifen (12)
**dadurch gekennzeichnet, dass**
der mindestens eine Verstärkungsstreifen (12) in Längsrichtung (14) der Folienbahn (10) zumindest teilweise seitlich ausgelenkt ist.

2. Folie nach Anspruch 1, **dadurch gekennzeichnet, dass** der Verstärkungsstreifen (12) in Längsrichtung (14) wellenförmig ist.

3. Folie nach Anspruch 1, **dadurch gekennzeichnet, dass** der Verstärkungsstreifen in Längsrichtung zick-zack-förmig ist.

4. Folie nach einem der Ansprüche 1 - 3, **dadurch gekennzeichnet, dass** mehrere Verstärkungsstreifen (12) vorgesehen sind.

5. Folie nach Anspruch 4, **dadurch gekennzeichnet, dass** die Verstärkungsstreifen (12) zueinander beabstandet sind.

6. Folie nach Anspruch 4, **dadurch gekennzeichnet, dass** sich die Verstärkungsstreifen (12) kreuzen.

7. Folie nach einem der Ansprüche 1 - 6, **dadurch gekennzeichnet, dass** die Breite des Verstärkungsstreifens (12) maximal 10 %, insbesondere maximal 7 % der Breite der Folienbahn (10) beträgt.

8. Vorrichtung zur Herstellung einer Folie nach einem der Ansprüche 1 - 7, mit
einer Abwickeleinrichtung (16) für eine Folienrolle (18), die die mit dem Verstärkungsstreifen (12) zu versehende Folienbahn (10) aufweist,
einer Bereitstellungseinrichtung (32) zur Bereitstellung mindestens eines Verstärkungsstreifens (12),
einer Aufwickeleinrichtung (40) zum Aufwickeln der mit dem Verstärkungsstreifen (12) versehenen Folienbahn (10) und
einer Verfahreinrichtung (44) zum Verändern der Lage des Verstärkungsstreifens (12) quer zur Längsrichtung (14) der Folienbahn (10).

9. Vorrichtung zur Herstellung einer Folie nach Anspruch 8, **dadurch gekennzeichnet, dass** die Verfahreinrichtung (44) mit der Bereitstellungseinrichtung (32) verbunden ist.

10. Vorrichtung zur Herstellung einer Folie nach Anspruch 8 oder 9, **dadurch gekennzeichnet, dass** die Verfahreinrichtung (44) einen pneumatischen Hubzylinder aufweist.

11. Vorrichtung zur Herstellung einer Folie nach einem der Ansprüche 8 - 10, **gekennzeichnet durch** eine Verbindungseinrichtung (38) zum Verbbinden des Verstärkungsstreifens (12) mit der Folienbahn (10).

12. Verfahren zum Herstellen einer Folie nach einem der Ansprüche 1 - 8, bei welchem
eine Folienbahn (10) in Längsrichtung (14) bewegt wird und
der Folienbahn (10) mindestens ein Verstärkungsstreifen (12) derart zugeführt wird, dass der Verstärkungsstreifen (12) bezüglich der Längsrichtung (14) der Folienbahn (10) zumindest teilweise seitlich ausgelenkt verläuft.

13. Verfahren zum Herstellen einer Folie nach Anspruch 12, bei welchem der Verstärkungsstreifen (12) quer zur Folienbahn (10) bewegt wird.

14. Verfahren zum Herstellen einer Folie nach einem der Ansprüche 12 oder 13, bei welchem der Verstärkungsstreifen (12) durch Andrücken oder Anblasen mit der Folienbahn (10) verbunden wird.
